## Europäisches Patentamt
## European Patent Office
## Office européen des brevets

(11) Publication number: **0 129 233**
**B1**

(12) # EUROPEAN PATENT SPECIFICATION

(45) Date of publication of patent specification: **17.05.89**

(51) Int. Cl.⁴: **G 01 N 27/30**

(21) Application number: **84106930.5**

(22) Date of filing: **18.06.84**

(54) Potassium ion-selective membranes.

(30) Priority: **20.06.83 US 506246**

(43) Date of publication of application:
**27.12.84 Bulletin 84/52**

(45) Publication of the grant of the patent:
**17.05.89 Bulletin 89/20**

(84) Designated Contracting States:
**CH DE FR GB IT LI**

(56) References cited:
**EP-A-0 030 503**
**EP-A-0 068 505**
**GB-A-2 102 963**
**US-A-3 835 011**

**The file contains technical information submitted after the application was filed and not included in this specification**

(73) Proprietor: **EASTMAN KODAK COMPANY**
**343 State Street**
**Rochester New York 14650 (US)**

(72) Inventor: **Daniel, Daniel Salman**
**3051 St. Paul Boulevard**
**Rochester New York 14617 (US)**
Inventor: **Kissel, Thomas Robert**
**200 Willowood Drive**
**Rochester New York 14612 (US)**

(74) Representative: **Brandes, Jürgen, Dr.rer.nat. et al**
**Thierschstrasse 8**
**D-8000 München 22 (DE)**

Courier Press, Leamington Spa, England.

**Description**

This invention relates to potassium ion-selective membranes. The membranes are useful in dry-operative ion-selective electrodes for selectively determining potassium ions.

In the diagnosis and treatment of various diseases as well as in preventative health checkups, it is becoming increasingly important to monitor the concentrations of certain ions (e.g. cations) in a patient's body. One cation which has merited considerable attention is potassium. High serum potassium levels are known to cause changes in muscle irritability, respiration and myocardial functions. Low potassium levels can cause excitatory changes in muscle irritability and myocardial function. Therefore, serum, potassium determination has become an important diagnostic tool when extremely high or low serum potassium levels are suspected.

One type of ion-selective electrode useful in determining ion concentration in body fluids has an electrode body (usually a glass or plastic container) containing a reference solution in contact with a half-cell of known potential (a reference electrode) and an ion-selective membrane located in an aperture in the electrode body. The ion-selective membrane is mounted in such a fashion that, when the electrode is immersed in the unknown solution, the membrane contacts both the reference and unknown solutions. A metal probe coated with a layer of insoluble salt of the metal in the reference solution and immersed therein serves as one of the contacts for measuring the potential between the electrodes and provides a reference potential for the electrode. The sensitivity of the electrode to an ion in solution is determined by the composition of the membrane. This type of electrode is referred to in the art as a "barrel" electrode.

The ion-selective membranes in barrel electrodes may be comprised of glass, solid salt precipitates or polymers. The polymeric membranes generally comprise a polymeric binder or support as the supporting matrix which is impregnated with a solution of an ion-selective carrier in a carrier solvent. The ion-selective carrier is a compound which is capable of sequentially complexing the desired ion and transporting the ion across the membrane-solution interface and decomplexing the ion. This compound is also referred to in the art as an "ionophore" or "ion carrier". Depending upon the carrier, solvent and matrix, membranes of this type can be used to detect a particular ion preferentially to other ions which may be in the solution.

Carrier solvents useful in ion-selective membranes must exhibit certain properties. The carrier solvents must provide suitable ion mobility in the membranes, be compatible with the supporting matrix and be sufficiently hydrophilic to permit rapid wetting by aqueous solutions but sufficiently water-insoluble to inhibit leaching out into those aqueous solutions. Ideally, they should also plasticize the supporting matrix and be substantially nonvolatile, thereby providing extended shelf life.

A significant advance in the ion-selective electrode art is the dry-operative electrode described in U.S. Patent 4,214,968 (issued July 29, 1980 to Battaglia et al). Prior to the discovery of such dry-operative ion-selective electrodes, electrodes had to be either stored in an aqueous solution or treated with aqueous solution just prior to use in an ion-activity-determining operation. The term "dry-operative" refers to an ion-selective electrode which provides reproducible potentiometric determination of ion activity which is related to the ion concentration of an aqueous test solution with no requirement for wet storage or preconditioning prior to use.

One of the specific ion-selective electrodes disclosed in the examples of Battaglia et al is a potassium ion-selective electrode using valinomycin as the potassium-selective carrier dissolved in a variety of solvating compounds. Among useful solvents mentioned are phthalates, sebacates, aromatic and aliphatic ethers, phosphates, mixed aromatic aliphatic phosphates, adipates and mixtures thereof. In the potassium-selective electrodes utilizing valinomycin as the ionophore, particularly preferred carrier solvents disclosed are bromophenyl phenyl ether and certain trimellitates.

In EP—A—0 068 505, a variety of carrier solvents are suggested. Dioctyl adipate is actually used for a $K^+$ electrode. The especially preferred carrier solvent in US—A—3 835 011 is dibutyl phthalate. In GB—A—2 102 963, didodecyl phthalate is used in Example 12. These specific solvents result in poor precision when used with valinomycin.

Dry-operative ion-selective electrodes are also described in Fuji's Japanese Patent Publications 17851/1982 and 17852/1982, both published January 29, 1982. In the first example of each publication, a $K^+$-selective electrode is described containing valinomycin, poly(vinyl chloride) and dioctyl phthalate as the carrier solvent. However, it has been observed that an electrode prepared using this particular phthalate as the carrier solvent exhibits poor precision in potassium ion determinations under certain conditions of use.

Further, it has been found that potassium ion-selective membranes and electrodes containing the membranes which are prepared according to the teaching of the Battaglia et al patent using the preferred carrier solvents taught therein (e.g. triisodecyl trimellitate), also exhibit undesirably poor precision in potassium ion determinations under certain conditions of use. It has also been observed that such membranes and electrodes are often sensitive to ambient temperature fluctuations thereby worsening precision in assay results. This poor precision worsens with extended storage.

It has been further observed that the known dry-operative potassium ion-selective electrodes often exhibit asymmetry potential. The asymmetry potential of an ion-selective membrane is an operationally-defined parameter relating to its cross-sectional uniformity. It is the potential which is generated across the membrane when both of its sides are exposed to the same test sample. If the potential is other than zero, the membrane has compositional differences between its two sides, i.e. it is asymmetric.

EP 0 129 233 B1

Since asymmetry reflects a nonequilibrium state in the membrane, a change in the potential over time is often observed. If the change in the potential occurs at a slow enough rate that little change is seen during the time for ion measurement, the asymmetry can be calibrated out in ion determination calculations. This situation generally occurs for ion-selective glass membranes. However, if the asymmetry potential change is fast enough to occur during the time for ion determination, the precision is adversely affected. This problem has frequently been observed in potassium ion-selective electrodes having membranes containing liquid carrier solvents.

Asymmetry can sometimes be alleviated in certain potassium electrodes by soaking the ion-selective composition several hours (18 or more) in a conditioning solution so that any large change in asymmetry potential can occur prior to its use in an ion determination. However, such a conditioning period is precluded for dry-operative ion-selective electrodes which would be detrimentally affected by wet storage or conditioning.

Thus, the problem to be solved is to provide an improved potassium ion-selective membrane which is more precise, has less sensitivity to temperature fluctuation and has less asymmetry potential than known membranes.

This problem is solved by providing a potassium ion-selective membrane comprising a matrix having therein valinomycin as the potassium carrier and a carrier solvent characterized in that the carrier solvent is diisodecyl phthalate, bis(2-ethylhexyl)sebacate and/or diisodecyl adipate.

The described ion-selective membranes exhibit high selectivity for potassium ions over other cations in a sample specimen as well as unexpectedly improved precision in potassium ion determinations and reduced sensitivity to fluctuations in ambient temperature. Further, these membranes exhibit these improved properties over a long period of time and therefore have greater shelf life.

Another unexpected advantage observed with these membranes is their reduced tendency to form asymmetric membranes. This characteristic also improves assay precision.

Fig. 1 is a graphical plot of asymmetry potential (mV) vs. time (sec.) for a membrane of this invention and for a state of the art membrane.

Fig. 2 is a graphical plot of potassium ion concentration (mM) vs. time (days) at various keeping temperatures for an electrode using a membrane of this invention and a state of the art electrode.

The potassium ion-selective membranes useful in the present invention include valinomycin as the potassium carrier. Valinomycin can be obtained commercially from a number of sources, including, for example, Calbiochem, located in LaJolla, California.

The valinomycin is solvated by one or more of the specific organic carrier solvents as described. The matrix of the membrane can also solvate the ionophore, but a separate carrier solvent is also included in the membranes. Such a matrix must allow for the transport of the potassium ions which are bound to valinomycin in the carrier solvent. For example, a porous glass support can be used as the matrix. In those embodiments, valinomycin is dissolved in the carrier solvent and the resulting solution is imbibed into the porous glass matrix to provide an ion-selective membrane. In other and preferred embodiments, the solution of valinomycin is dispersed in a matrix which is a hydrophobic binder, e.g. a hydrophobic polymer binder. By "hydrophobic" is meant substantially water-insoluble. The binder dispersion is coated and dried to produce a potassium ion-selective membrane useful in the present invention.

The useful carrier solvents are listed in Table I below:

TABLE I

| Solvent | Viscosity (cp at 20°C) | b.p. (at 5 mm) |
|---|---|---|
| diisodecyl phthalate | 94 | 233 |
| bis(2-ethylhexyl)sebacate | 21 | 187 |
| diisodecyl adipate | 18 | 220 |

A particularly preferred composition includes valinomycin and diisodecyl phthalate as the carrier solvent.

These carrier solvents are all commercially available. For example, diisodecyl phthalate is available from Ashland Chemical Co., Buffalo, New York.

A membrane composition can be formed by incorporating the carrier solvent and valinomycin in one or more binders which serve as the supporting matrix. Useful binders include hydrophobic natural or synthetic polymers capable of forming thin films of sufficient permeability to produce, in combination with the valinomycin and carrier solvent, ionic mobility across the membrane interfaces. Useful polymers include: 1) poly(vinyl chloride), 2) poly(vinylidene chloride), 3) poly(acrylonitrile), 4) polyurethanes, particularly aromatic polyurethanes, 5) copolymers of vinyl chloride and vinylidene chloride, 6) poly(vinyl butyral), 7) poly(vinyl formal), 8) poly(vinyl acetate), 9) copolymers of vinyl acetate and vinyl chloride, 10) silicone elastomers and 11) copolymers of vinyl alcohol, cellulose esters and polycarbonates. Other useful

3

polymers include carboxylated polymers of poly(vinyl chloride) and mixtures and copolymers of these materials. A preferred binder is poly(vinyl chloride-co-vinyl acetate) (90:10 weight ratio). Membranes including one or more binders, valinomycin and one or more of the described carrier solvents are prepared using conventional film-coating or casting techniques.

The membranes preferably have a glass transition temperature (Tg) of greater than about −50°C in order to have desired film characteristics. Tg can be determined by any convenient method suitable for this purpose. For example, one such method is differential scanning calorimetry, as described in *Techniques and Methods of Polymer Evaluation,* Vol. 2, Marcel Dekker, Inc., New York, 1970. Preferably, the membranes have a Tg in the range of from about −50 to about −20°C.

The membranes contain the described components over a wide range of concentrations or coverages. The coverage of valinomycin depends upon the carrier solvent used, as well as other factors. The preferred membranes comprise a hydrophobic binder having the carrier solvent and valinomycin dispersed therein. In those membranes, valinomycin coverages of between about 0.1 $g/m^2$ and 2.0 $g/m^2$ are useful and coverages between about 0.2 $g/m^2$ and 0.8 $g/m^2$ are preferred.

The carrier solvent is present in an amount sufficient to solvate valinomycin. The amount therefore depends on the particular solvent chosen. Generally, more solvent is used than is necessary to just solvate valinomycin so that it remains solvated under a variety of storage conditions. A 100 to 500 percent excess on a weight basis is particularly useful. Usually, the coverage of carrier solvent will be within the range of from about 2 $g/m^2$ to about 24 $g/m^2$, and preferably from about 5 to about 20 $g/m^2$.

The amount of hydrophobic polymer matrix which is present is determined by the desired thickness of the membrane and by the necessity for providing support of the valinomycin-solvent dispersion. The membranes generally have a thickness in the range of from about 2 μm to about 20 μm. The polymer coverage is usually between about 2 and 24, and preferably from about 3 to about 12 $g/m^2$.

In addition to the matrix, valinomycin and carrier solvent, the described membrane compositions optionally contain other components such as surfactants and plasticizers in amounts known to those skilled in the art.

As noted, surfactants are useful components of the described membranes. The surfactants serve a variety of functions including improving the coatability of the membrane composition and improving the solvation of valinomycin by the matrix or carrier solvent. Useful surfactants include nonionic surfactants such as the alkylaryl polyether alcohols 1) (Tritons™) available from Rohm and Haas Co., 2) (*p* - isononylphenoxy) - polyglycidol (Surfactant 10G™) available from Olin Mathieson Corp., 3) polyoxyethylene (20) oleyl ether (Brij 98™), polyoxyethylene sorbitan monolaurate (Tween 20™) and Span 80™, all available from Atlas Chemical Industries, 4) poly(dimethyl - comethylphenyl siloxane) (DC-510™) available from Dow Corning, 5) Zonyl FSN™ available from E. I. duPont, and 6) fluorochemical surfactant FC134™ available from 3M Co. The surfactant is typically present from 0.03 $g/m^2$ to 0.15 $g/m^2$.

The described membranes are useful in a variety of dry-operative electrode structures including, for example, the dry ion-selective electrodes described in Japanese Patent Publications 17851/1982 and 17852/1982, both published January 29, 1982 noted above.

In a particularly preferred embodiment, the described membranes are used in a dry-operative ion-selective electrode as described in U.S. Patent 4,214,968 noted above. In this embodiment, there is provided a dry-operative ion-selective electrode comprising:

(a) a dried internal reference element comprising the dried residue of a solution of a salt and a hydrophilic polymeric binder in a solvent for the polymer and the salt and,

(b) in physical contact with the reference element, a hydrophobic ion-selective membrane of predetermined uniform thickness in regions thereof intended for physical contact with the sample for analysis, the membrane comprising a hydrophobic binder having distributed therein valinomycin dissolved in the diester carrier solvent described above.

In this embodiment of the present invention, the electrodes are made by a process and using components which are described in U.S. Patent 4,214,968 (noted above). As used throughout this specification and in the claims, the expressions "dry-operative", "dried" and "uniform" have the meanings defined in that patent. The use of the hydrophilic binder in the dried internal reference element is optional, but preferred.

The electrodes using the membrane of this invention can be used to determine the concentration of potassium in an aqueous solution, e.g. biological fluids such as whole blood, intracellular fluids, blood sera and urine. Generally, a portion of the solution to be assayed is brought into contact with the ion-selective electrodes described above which are capable of making potentiometric measurements related to the potassium ion concentration. Subsequently, the difference in potential between the portion of aqueous solution and the reference electrode is measured. Preferably, a drop of the aqueous solution is spotted onto the potassium ion-selective membrane of such electrode with a pipette or other suitable means, but other ways of contacting the electrode with the solution are acceptable.

The following examples are presented to illustrate the practice of this invention.

The dry-operative electrodes used in these examples were of the format and prepared by the methods described by the Battaglia et al patent referenced above. In general, each electrode comprised a polyester support having layers in sequence as follows: 1) silver/silver chloride reference electrode, 2) electrolyte layer comprising gelatin, KCl, glycerol and Olin Surfactant 10G™, and 3) the membrane layer.

The membrane layer contained: poly(vinyl chloride-co-vinyl acetate) (90:10 weight ratio) as supporting matrix, a carrier solvent as indicated, valinomycin, and the surfactant DC-510™.

Example 1

Potassium ion-selective electrode using diisodecyl phthalate as carrier solvent having improved precision

This example illustrates a comparison illustrating the improved precision of the dry-operative potassium ion-selective electrode of this invention compared to a state of the art dry-operative potassium ion-selective electrode described in U.S. Patent 4,214,968 (Battaglia et al) noted above.

The electrodes were tested by spotting 10 µl aliquots of the sample specimen indicated and potentials were measured against a reference electrode consisting of an identical piece of potassium electrode which was spotted with 10 µl of a standard saline reference solution. The potentials were evaluated using an EKTACHEM™ E-400 clinical analyzer available from Eastman Kodak Co., Rochester, N.Y. The potentials were measured for several electrodes for each sample specimen and standard deviations (σmV) of millivolt readings were determined.

In tests 1 and 2, the sample specimens tested were "serum" samples obtained from 2 serum-based calibrators and a serum pool, and "saline" samples which were from a solution of 0.1 M KCl and poly(vinyl pyrrolidone) (5 g/l) in water. Twenty-seven "serum" replicates and nine "saline" replicates were performed. In tests 3 and 4, one hundred and fifty "serum" replicates were obtained from three serum control fluids. In each test, the mV potentials were calculated using the $K^+$ concentration data obtained from the EKTACHEM™ analyzer at two different ambient temperatures ($\approx 20°C$ and $\approx 30°C$), and the standard deviations (σmV) were determined. The reference fluid in each test was a protein-free physiological saline solution containing 5 g/l poly(vinyl pyrrolidone), 140 mM $Na^+$, 4.5 mM $K^+$, 108 mM $Cl^-$ and 25 mM $HCO_3^-$ at pH 9.

The resulting data are presented in Table II. The lower the σmV value, the more precise is the electrode in measuring $K^+$. The state of the art electrodes were prepared using triisodecyl trimellitate (360 cps viscosity; >170°C b.p. at 5 mm) as carrier solvent. The electrodes of this invention were prepared using diisodecyl phthalate as the carrier solvent.

## TABLE II

| Test | Electrode | Sample specimen | σmV (20°C.) | σmV (30°C) |
|---|---|---|---|---|
| 1 | Control | "serum" | 0.32 | 0.57 |
| | " | "saline" | 0.25 | 0.77 |
| | Example | "serum" | 0.20 | 0.31 |
| | " | "saline" | 0.21 | 0.28 |
| 2 | Control | "serum" | 0.31 | 0.58 |
| | " | "saline" | 0.28 | 0.58 |
| | Example | "serum" | 0.22 | 0.17 |
| | " | "saline" | 0.25 | 0.13 |
| 3 | Control | "serum" | 0.33 | 0.38 |
| | Example | "serum" | 0.26 | 0.23 |
| 4 | Control | "serum" | 0.32 | 0.66 |
| | Example | "serum" | 0.23 | 0.27 |

As can be seen from these data, the electrodes of the present invention exhibit improved precision in assay results over the state of the art electrodes. This improvement is particularly pronounced at the higher ambient temperature.

Example 2

Potassium ion-selective electrode having reduced asymmetry potential

This is a comparative example illustrating the reduced asymmetry potential exhibited by a potassium ion-selective membrane prepared according to this invention compared to a state of the art potassium ion-selective electrode.

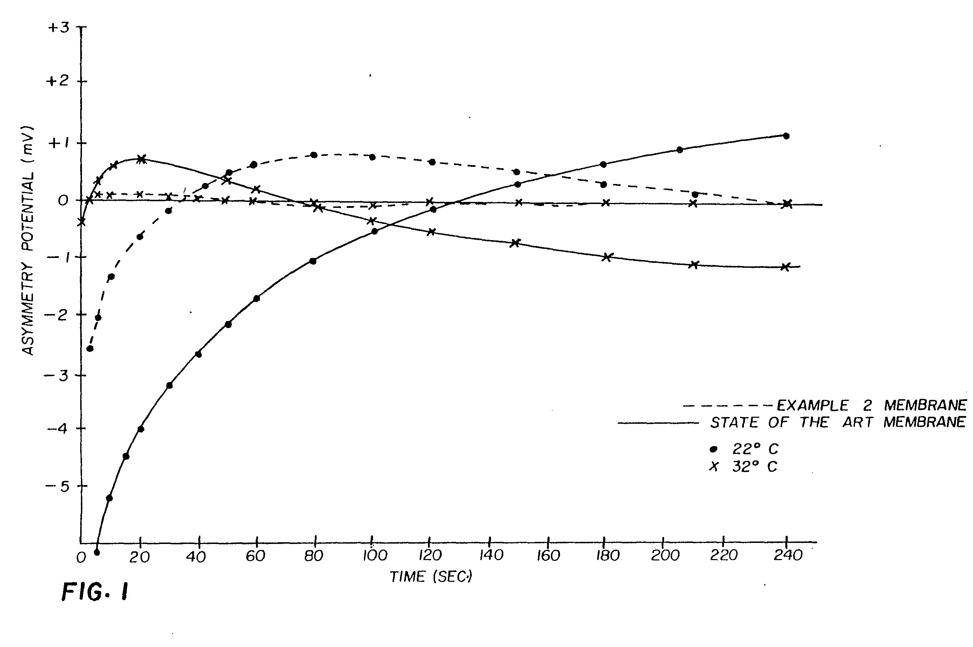

Two dry-operative ion-selective electrodes (a control and an example) were prepared by the procedure described in Example 1. Following electrode preparation, each membrane was peeled off its respective electrode and supported in the center of a plexiglass concentration cell so as to form a barrier between two 40 ml compartments of the cell. An anodized Ag/AgCl wire was placed in each compartment for use as a measurement electrode. About 10 ml of the physiological saline solution noted in Example 1 was placed in the bottom of each cell compartment so as to wet the electrodes but not the membrane. Three minutes after this addition, an additional 30 ml of saline solution was added to each compartment and the asymmetry potential was measured with the electrodes. The saline solutions were at either 22°C or 32°C. A fresh piece of membrane was used for each test. The resulting data were plotted in graphical form as illustrated in Fig. 1. As an ideal, it is desirable that the asymmetry potential be as close to zero as possible. This figure indicates that the absolute magnitude of the asymmetry potential is considerably less for the membrane of this invention than for a state of the art membrane. Further, the change in asymmetry potential caused by the higher ambient temperature (32°C) is less for the membrane of this invention than for the state of the art membrane.

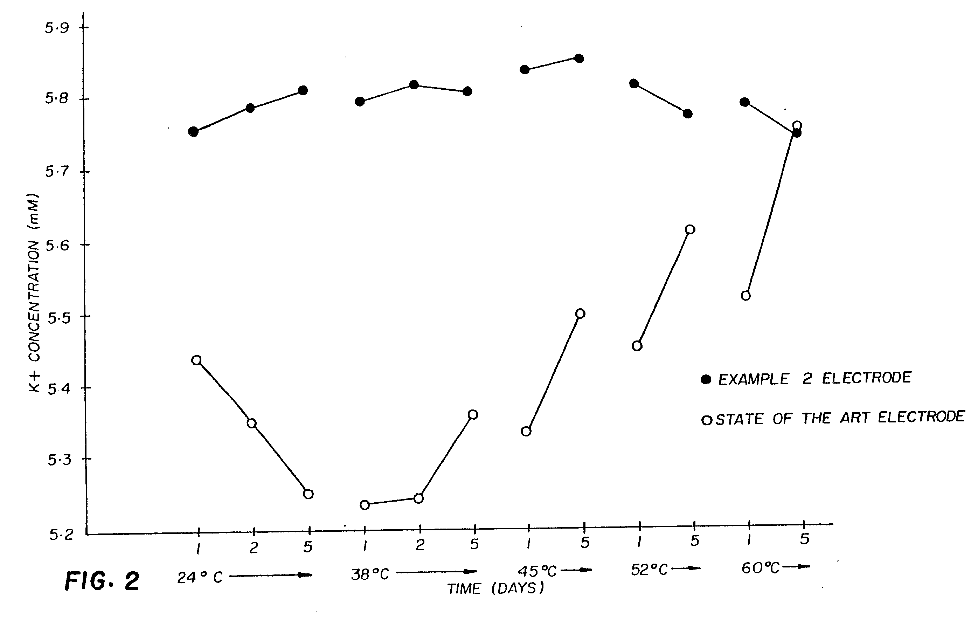

Example 3
Potassium ion-selective electrode having improved temperature stability
This is a comparative example illustrating the improved temperature stability exhibited by a potassium ion-selective electrode of this invention compared to a state of the art potassium ion-selective electrode.
Both electrodes (control and example) were prepared by the procedure described in Example 1 except that the example electrodes contained 16 g/m² of diisodecyl phthalate as the carrier solvent and the control electrode contained 12 g/m² of triisodecyl trimellitate.
The electrodes were subjected to various keeping or storage temperatures (24°C, 38°C, 45°C, 52°C and 60°C) under conventional accelerated keeping conditions and frozen until tested. Each electrode was then tested for $K^+$ concentration at 70°C and 50% relative humidity using a commercially-available pooled bovine serum as a source of specimen samples. The results of these tests are illustrated in Fig. 2. The data in that figure show the improved temperature stability exhibited by the electrodes of this invention over state of the art electrodes at all keeping temperatures considered. The electrodes of this invention show little change in $K^+$ determination after storage for up to five days while the state of the art electrodes show considerable change.

**Claims**

1. A potassium ion-selective membrane comprising a matrix having therein valinomycin as the potassium carrier and a carrier solvent characterized in that said carrier solvent is diisodecyl phthalate, bis(2-ethylhexyl)sebacate and/or diisodecyl adipate.
2. The membrane of claim 1, wherein said matrix is a hydrophobic polymer.
3. The membrane of claim 2, wherein said hydrophobic polymer is poly(vinyl chloride-co-vinyl acetate).
4. The use of the membrane of any previous claim in an ion-selective electrode.

**Patentansprüche**

1. Für Kaliumionen selektive Membran mit einer Matrix, die Valinomycin als Kaliumträger und ein Trägerlösungsmittel enthält, dadurch gekennzeichnet, daß das Trägerlösungsmittel Diisodecylphthalat, Bis(2-ethylhexyl)sebacat und/oder Diisodecyladipat ist.
2. Membran nach Anspruch 1, in der die Matrix ein hydrophobes Polymer ist.
3. Membran nach Anspruch 2, in der das hydrophobe Polymer Poly(vinylchlorid-co-vinylacetat) ist.
4. Verwendung der Membran nach einem der vorstehenden Ansprüche in einer ionenselektiven Elektrode.

**Revendications**

1. Membrane sélective pour les ions potassium comprenant une matrice dans laquelle se trouvent de la valinomycine comme véhicule du potassium et un solvant du véhicule caractérisée en ce que ledit solvant du véhicule est du phtalate de diisodécyle, du sébacate de di(éthyl-2 hexyle) et/ou de l'adipate de diisodécyle.
2. Membrane selon la revendication 1 dans laquelle la matrice est un polymère hydrophobe.
3. Membrane selon la revendication 2 dans laquelle le polymère hydrophobe est un copolymère de chlorure de vinyle et d'acétate de vinyle.
4. Utilisation de la membrane selon l'une quelconque des revendications précédentes dans une électrode sélective pour un ion.

FIG. 1

EP 0 129 233 B1

FIG. 2

● EXAMPLE 2 ELECTRODE
○ STATE OF THE ART ELECTRODE